(19) Europäisches Patentamt
European Patent Office
Office européen des brevets

(11) **EP 3 995 685 B1**

(12) **FASCICULE DE BREVET EUROPEEN**

(45) Date de publication et mention de la délivrance du brevet:
**29.11.2023 Bulletin 2023/48**

(21) Numéro de dépôt: **21204628.8**

(22) Date de dépôt: **26.10.2021**

(51) Classification Internationale des Brevets (IPC):
**F02D 41/22** *(2006.01)*     **F02D 41/18** *(2006.01)*
**F02M 26/06** *(2016.01)*     *F02M 26/05* *(2016.01)*

(52) Classification Coopérative des Brevets (CPC):
**F02D 41/18; F02D 41/0055; F02D 41/222;
F02M 26/05; F02M 26/06; F02M 35/1038;
F02M 35/10386;** F02D 41/0072; F02D 41/123;
F02D 2200/0402; F02M 26/35; Y02T 10/40

(54) **PROCÉDÉ DE DIAGNOSTIC D'UN DÉBITMÈTRE D'AIR POUR MOTEUR À COMBUSTION INTERNE**

VERFAHREN ZUR DIAGNOSE EINES LUFTDURCHFLUSSMESSERS FÜR EINEN VERBRENNUNGSMOTOR

METHOD FOR DIAGNOSING AN AIR FLOWMETER FOR AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2020 FR 2010965**

(43) Date de publication de la demande:
**11.05.2022 Bulletin 2022/19**

(73) Titulaire: **Renault s.a.s**
**92100 Boulogne Billancourt (FR)**

(72) Inventeurs:
• **LEFEVRE, Cédric**
**91510 LARDY (FR)**
• **Pereira, Luc**
**18320 Cours Des Barres (FR)**

(74) Mandataire: **Renault Group
Renault s.a.s.
1 avenue du Golf
FR TCR AVA 055
78084 Guyancourt Cedex (FR)**

(56) Documents cités:
DE-A1-102016 220 029     JP-A- 2010 261 354
US-A1- 2004 182 079     US-A1- 2012 130 618

## Description

### Domaine Technique de l'invention

L'invention concerne un procédé de diagnostic de l'état de fonctionnement d'un débitmètre d'air pour un moteur à combustion interne suralimenté, voir par exemple US 2012/0130618 A1. Elle concerne plus précisément les moteurs à combustion interne qui sont équipés d'au moins un circuit de recirculation partielle à basse pression des gaz d'échappement à l'admission du moteur. Elle trouve une application avantageuse sous la forme d'un procédé de diagnostic embarqué dans un véhicule automobile équipé d'un moteur à allumage commandé (du type fonctionnant notamment à l'essence) ou à allumage par compression (du type diesel) associé à un tel circuit de recirculation.

### Etat de la technique

De nombreux moteurs à combustion interne modernes, en particulier les moteurs diesel et plus récemment les moteurs à essence des véhicules automobiles, sont équipés d'un circuit de recirculation partielle à basse pression des gaz d'échappement à l'admission, dit aussi circuit EGR-BP (EGR étant l'acronyme en anglais pour : « Exhaust Gas Recycling » et BP l'acronyme en français pour : « Basse Pression »).

L'intérêt d'un tel circuit est bien connu, en ce qui concerne les moteurs diesel, pour diminuer les émissions d'oxydes d'azote (NOx) dans les gaz de combustion du moteur, et, en ce qui concerne les moteurs à essence, pour diminuer la consommation de carburant du moteur en le rendant moins sensible au cliquetis et en permettant d'augmenter l'avance à l'allumage du moteur.

Il est important que le débit (massique) des gaz d'échappement recyclés à l'admission soit réglé de manière précise par rapport au débit (massique) d'air admis dans le moteur, de manière à obtenir ladite réduction des émissions de NOx ou de consommation de carburant dans les proportions prévues lors de la mise au point du moteur.

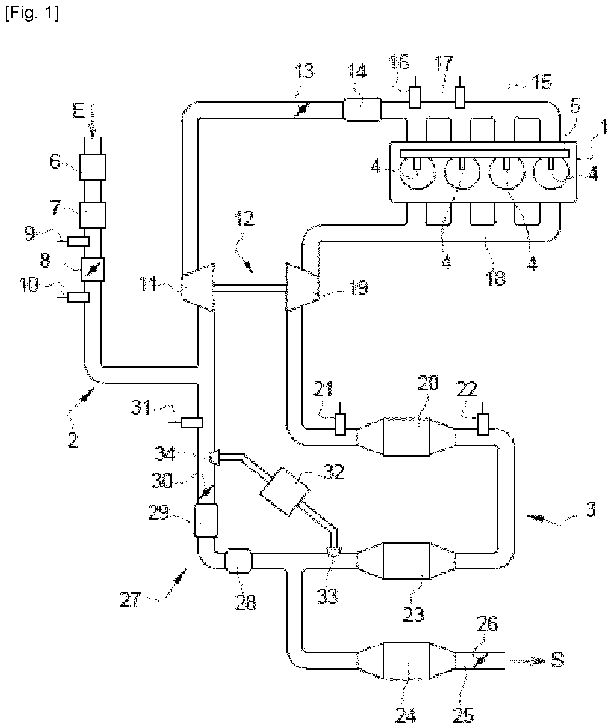

Or, un tel réglage se fonde souvent sur la mesure d'une valeur de débit d'air, mesurée par un débitmètre monté à l'entrée du circuit d'admission d'air du moteur, comme on le décrit à l'appui de la figure 1.

Sur la figure 1, on a représenté un premier exemple de dispositif de motorisation qui comprend un moteur à combustion interne 1, par exemple du type à allumage commandé (fonctionnant notamment à l'essence), qui se présente ici sous la forme d'un moteur à quatre cylindres en ligne. Il s'agit d'un moteur 1 qui est suralimenté par un turbocompresseur, et qui est pourvu d'un circuit de recirculation partielle à basse pression des gaz d'échappement (circuit EGR-BP).

Le moteur 1 est associé à un circuit d'admission d'air 2 et à un circuit d'échappement 3 des gaz de combustion du moteur. Il est aussi associé à un circuit d'alimentation en carburant dont on a représenté les injecteurs 4 qui alimentent les différents cylindres du moteur en carburant (essence), par exemple à partir d'une rampe commune 5.

Le circuit d'admission 2 comprend, d'amont en aval dans le sens de circulation de l'air à partir de l'endroit matérialisé par la flèche E sur la figure : un filtre à air 6 ; un débitmètre 7 apte à mesurer un débit massique d'air Qair pénétrant dans le moteur ; une vanne d'admission d'air 8, avec un premier capteur de pression amont 9 apte à mesurer la pression à l'entrée de ladite vanne 8 et un premier capteur de pression aval 10 apte à mesurer la pression à la sortie de ladite vanne 8 ; un compresseur 11 de turbocompresseur 12 ; une vanne d'admission des gaz 13 dans le moteur, ou boîtier-papillon 13; un refroidisseur 14 des gaz d'admission ; et, un répartiteur d'air 15, ou collecteur d'admission 15, pourvu d'un capteur de pression 16 et d'un capteur de température 17, qui sont respectivement aptes à mesurer la valeur de la pression Pcol et la valeur de la température Tcol des gaz dans le répartiteur 15.

Le circuit d'échappement 3 comprend, d'amont en aval dans le sens de circulation des gaz de combustion et jusqu'à leur évacuation après post-traitement dans l'atmosphère extérieure à l'endroit matérialisé par la flèche S sur la figure: un collecteur d'échappement 18 ; une turbine 19 du turbocompresseur 12, montée sur un arbre commun au compresseur 11 ; et une pluralité de dispositifs de post-traitement, ou de dépollution, des gaz de combustion émis par le moteur 1.

La turbine 19 sert de manière connue en soi à prélever de l'énergie sur les gaz d'échappement (gaz de combustion) qui la traversent en les détendant, et à transférer cette énergie au compresseur 11 par l'intermédiaire de leur arbre commun afin de comprimer les gaz d'admission. Pour cela, la turbine peut être du type « à géométrie variable », c'est-à-dire comprendre une roue de turbine à ailettes d'inclinaison variable, dont on ajuste le degré d'inclinaison pour régler la quantité d'énergie prélevée aux gaz traversants et la pression à laquelle on comprime les gaz d'admission (pression de suralimentation). En variante non représentée, il peut s'agir d'une turbine à géométrie fixe. Dans ce cas, le circuit d'échappement comprend un circuit de contournement de la turbine, muni d'une vanne de décharge à l'échappement (bien connue sous l'appellation de vanne « waste gate » selon sa dénomination en anglais). La quantité d'énergie prélevée aux gaz d'échappement est alors réglée en ajustant le débit de gaz d'échappement traversant la turbine, par une ouverture plus ou moins grande de la vanne de décharge.

Le circuit d'échappement 3 comporte un premier dispositif de dépollution 20 qui se présente ici, s'agissant d'un moteur à essence, sous la forme d'un premier catalyseur trois voies 20, par exemple un catalyseur rapproché monté dans le compartiment moteur du véhicule, avec une sonde à oxygène amont 21 de type proportionnel apte à mesurer une valeur de richesse R des gaz d'échappement à l'entrée dudit premier catalyseur 20, et avec en outre une sonde à oxygène aval 22 qui peut être de type binaire pour déterminer un état riche ou pauvre des gaz d'échappement à la sortie dudit premier catalyseur 20, ou en variante, de type proportionnel pour mesurer une valeur de la richesse des gaz d'échappement à la sortie dudit premier catalyseur 20. De manière connue en soi, s'agissant dans l'exemple de la figure 1 d'un moteur à essence, la sonde à oxygène amont 21 seule, ou la sonde à oxygène amont 21 associée à la sonde à oxygène aval 22, sert à régler les proportions du mélange air - carburant dans les cylindres du moteur pour la production du couple moteur souhaité. Dans un mode simplifié, il peut s'agir du réglage en boucle fermé de la richesse R du mélange sur une valeur de richesse de consigne Rsp égale à 1. Le signal délivré par la sonde à oxygène amont 21 permet de déterminer la valeur courante de la richesse R en amont du premier catalyseur 20 ; l'écart entre ladite valeur de richesse R et la consigne Rsp (égale à 1) est entrée dans un régulateur, dont la sortie est une valeur de correction de débit de carburant Qcarb,corr qui est ajoutée à une consigne de débit de carburant Qcarb,sp,bo calculée en boucle ouverte à partir d'une valeur estimée de débit d'air dans les proportions stoechiométriques (1 gramme de carburant pour 14,7 grammes d'air). Dans un mode perfectionné du précédent, il peut s'agir du réglage en boucle fermée de la richesse du mélange R sur une valeur de consigne Rsp qui est égale à 1 plus une valeur de correction positive ou négative qui dépend des indications de la sonde à oxygène aval 22.

Le circuit d'échappement 3 comporte un deuxième dispositif de dépollution 23; ici un filtre à particules 23, et un troisième dispositif de dépollution 24, par exemple un deuxième catalyseur trois voies 24 qui est monté sous la caisse du véhicule.

Le circuit d'échappement 3 comprend encore une conduite d'échappement 25 qui peut être munie d'une vanne d'échappement 26.

En outre, dans le cadre du problème technique traité par l'invention, le circuit d'échappement 3 comprend un circuit de recirculation partielle à basse pression 27 des gaz d'échappement à l'admission. Ce circuit EGR-BP 27 prélève une partie des gaz d'échappement en un point du circuit d'échappement 3 où ils sont déjà détendus par la turbine 19, dans l'exemple de la figure en aval du filtre à particules 23. Il réintroduit ces gaz en un point du circuit d'admission 2 où les gaz d'admission ne sont pas encore comprimés par le compresseur 11, sur l'exemple de la figure entre la vanne d'admission d'air 8 et le compresseur 11.

Le circuit EGR-BP 27 comprend un refroidisseur des gaz recyclés 28 ; un filtre des gaz recyclés 29 ; une vanne de réglage des gaz recyclés 30, dite aussi vanne EGR-BP 30 ; et, un dispositif de mesure de la pression différentielle Pdiff,egrbp régnant aux bornes du circuit EGR-BP 27 comprenant un capteur de pression différentielle 32 relié à deux piquages amont 33 et aval 34 du circuit d'échappement, aux extrémités du circuit EGR-BP 27.

Le moteur peut encore présenter d'autres spécificités sans sortir du cadre de l'invention. Par exemple il peut comprendre un système de distribution variable à l'admission (dit aussi « VVT » selon l'acronyme anglais pour : Variable Valve Timing), apte à faire varier le calage des soupapes d'admission dans le cycle de combustion du moteur.

Le procédé de réglage du moteur 1 est par exemple conforme à la description suivante, quand le moteur est monté sur un véhicule automobile :

Une consigne de couple C moteur, provenant d'une valeur d'enfoncement de la pédale d'accélérateur du véhicule par le conducteur, est transformée par un calculateur (non représenté) du moteur, selon le régime N du moteur, en une consigne de débit d'air Qair,sp , une consigne de richesse qui peut être égale à 1 (ou en variante une valeur corrigée), et en une consigne de taux de gaz recyclés τegr,sp , dite aussi consigne de taux d'EGR. A partir de ces valeurs, le calculateur calcule une consigne de débit des gaz recyclés Qegrbp,sp , et une consigne de débit total Qmot,sp à admettre dans les cylindres du moteur, selon les équations suivantes :

$$[\text{Math. 1}] \quad Qmot,sp = Qair,sp \, / \, (1 - \tau egr,sp)$$

et

$$[\text{Math. 2}] \quad Qegrbp,sp = \tau egr,sp * Qair,sp \, / \, (1 - \tau egr,sp)$$

On règle ensuite, d'une part, le débit total des gaz d'admission entrant dans le moteur, et d'autre part, le débit des gaz recyclés, dit aussi débit d'EGR. Le débit d'air n'est pas réglé directement, mais il est la résultante de ces deux réglages. On détaille maintenant la manière de procéder à ces deux réglages.

Pour régler le débit total des gaz d'admission admis dans le moteur, on se sert d'une correspondance entre la valeur du débit Qmot et la valeur de la pression Pcol régnant dans le collecteur d'admission 15, plus précisément, d'un modèle de remplissage selon l'équation suivante :

$$[\text{Math. 3}] \quad Qmot = \eta * COEFF * (N / 60) * CYL * (Pcol / r * Tcol)$$

, équation dans laquelle :

- Qmot désigne le débit entrant dans le moteur (exprimé en kg/s),
- COEFF est un coefficient constant qui dépend du nombre de cylindres dans le moteur et du nombre de temps (par exemple ½ pour un moteur à 4 cylindres et 4 temps)
- N désigne le régime du moteur (en tour/min)
- CYL désigne la cylindrée du moteur (en m$^3$))
- Pcol désigne la pression dans le collecteur d'admission (en bars)
- r est la constante des gaz parfaits pour l'air, soit 287,058 J*kg$^{-1}$*K$^{-1}$
- Pcol désigne la pression dans le collecteur d'admission (en Pa)
- Tcol désigne la température dans le collecteur d'admission (en K)
- $\eta$ (coefficient sans unité) désigne le rendement volumétrique ; il s'agit du rapport entre le volume d'air entrant réellement dans les cylindres, divisé par le volume qui pourrait théoriquement y entrer compte tenu du volume des chambres de combustion du moteur.

Le rendement volumétrique $\eta$ est une grandeur qui dépend au moins du régime N du moteur et de la pression régnant dans le collecteur Pcol. Il peut dépendre de paramètres supplémentaires comme par exemple la position du système de distribution variable à l'admission (WT à l'admission) si le moteur en est équipé. Le rendement volumétrique $\eta$ est cartographié par des essais préalables réalisés sur banc d'essai instrumenté an faisant varier les différents paramètres concernés (régime N, pression dans le collecteur Pcol, etc.), puis la cartographie est stockée dans une mémoire du calculateur du moteur.

En fonctionnement embarqué sur le véhicule, la consigne de débit total des gaz d'admission Qmot,sp est transformée en une consigne de débit de pression de collecteur d'admission Pcol,sp (qui dépend de la température Tcol et peut varier même si la consigne de débit ne varie pas).On règle alors le débit dans le collecteur d'admission Pcol sur ladite consigne de pression Pcol,sp en boucle fermée, en ajustant la position angulaire du boîtier-papillon 13 quand le moteur fonctionne dans le domaine atmosphérique. Dans le domaine suralimenté, la pression est réglée par une combinaison des ajustements de position angulaire du boîtier-papillon 13 et de position angulaire des ailettes de la turbine 19 (ou en variante : de position de la vanne « waste gâte »). A chaque instant, la valeur courante de la pression Pcol est déterminée par le capteur de pression du collecteur d'admission 16 et la valeur de la consigne de pression Pcol,sp est déterminée grâce à l'équation du modèle de remplissage, à partir du rendement volumétrique $\eta$ cartographié et de la valeur de température dans le collecteur d'admission Tcol qui est mesurée par le capteur de température 17 du collecteur d'admission.

Le débit des gaz recyclés Qegr est réglé en boucle fermée sur sa valeur de consigne Qegrbp,sp , qui est définie selon l'équation mentionnée plus haut, généralement en ajustant la position angulaire de la vanne EGR-BP 30. Dans certains cas, il peut être nécessaire de de diminuer l'ouverture de la vanne d'admission d'air 8 de manière à créer à son aval, et donc à la sortie du circuit EGR-BP 27, une dépression de nature à augmenter la circulation des gaz recyclés.

Dans le cadre de cette régulation, la valeur courante du débit de gaz recyclés Qegrbp est calculée comme la différence entre le débit total des gaz d'admission Qmot (par application de l'équation du modèle de remplissage) et du débit courant d'air frais Qair qui est déterminé par le débitmètre 7. La valeur du débit d'air Qair mesurée par le débitmètre 7 est notée $Q_{HFM}$ dans la suite (HFM désigne l'acronyme en anglais pour « Hot Flow Meter » qui désigne un débitmètre à fil chaud).

La richesse R est réglée en boucle fermée autour de sa consigne Rsp (par exemple 1) en ajustant le débit de carburant, comme exposé plus haut. On comprend de ce qui précède que la précision de la mesure par le débitmètre $Q_{HFM}$ du débit d'air Qair est très importante pour le réglage du débit adéquat de gaz recyclés Qegrbp.

Sur un moteur à essence, une surestimation du débit d'air par le débitmètre entraîne une sous-estimation du débit de gaz recyclés qui est réellement obtenu. Cela peut se traduire, quand le taux d'EGR devient trop élevé, à des ratés de combustion et/ou à des instabilités qui augmentent les émissions polluantes du moteur, et à une mauvaise maîtrise du couple qui peut entraîner des problèmes d'agrément, notamment lors de changements de rapport de boîte de vitesses automatique.

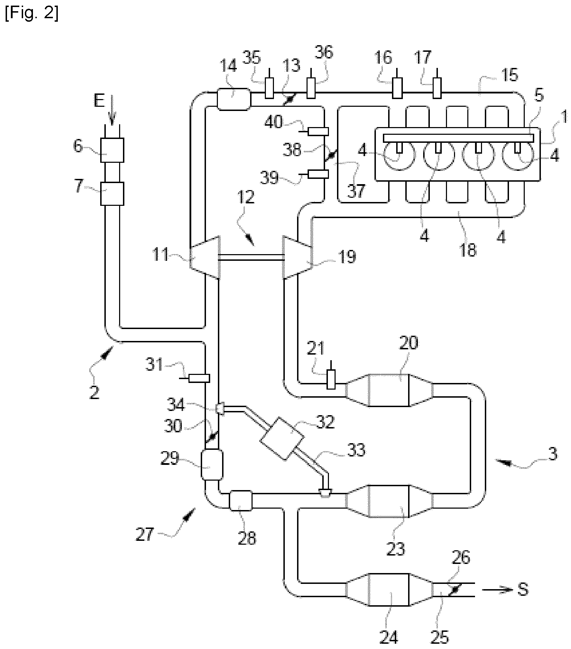

Dans le cas d'un moteur diesel (décrit plus loin à l'appui de la figure 2), une sous-estimation du débit d'air par le débitmètre entraîne une surestimation du débit des gaz recyclés. Si le taux d'EGR réellement obtenu est trop faible, il en résulte des émissions plus élevées d'oxydes d'azote. Si le taux d'EGR réellement obtenu est trop fort, il est possible qye les émissions d'oxydes d'azote soient plus faibles, mais dans ce cas les émissions de particules de suie PM du moteur sont plus élevées.

Il existe donc un besoin de vérifier le bon fonctionnement d'un débitmètre utilisé dans un tel procédé de réglage d'un débit de gaz d'échappement recyclés à basse pression. On connaît de l'état de l'art un procédé de diagnostic d'un tel débitmètre dans lequel, sur un point de fonctionnement stabilisé du moteur, on supprime la recirculation des gaz d'échappement à l'admission, de sorte que seul de l'air est introduit dans les chambres de combustion du moteur. On compare alors la valeur du débit d'air mesurée par le débitmètre $Q_{HFM}$ avec une valeur $Q(Pcol,Tcol)$ calculée grâce à l'équation du modèle de remplissage (à partir d'une mesure de pression Pcol et de température Tcol dans le collecteur d'admission), les deux valeurs étant stabilisées, et on constate une défaillance du débitmètre si l'écart entre les deux mesures est supérieur à un seuil pré-calibré. Ce procédé a fait la preuve de sa précision, et il est utilisé en grande série.

Cependant il est intrusif, car il nécessite de dérégler le moteur par rapport à son fonctionnement normal, et la coupure de la recirculation des gaz d'échappement crée, dans le cas d'un moteur à essence, une plus grande sensibilité au cliquetis qui nécessite de procéder à des retraits d'avance, ce qui augmente la consommation de carburant si le couple reste identique, ou ce qui crée, dans le cas d'un moteur diesel, un pic d'émissions polluantes (oxydes d'azote ou suies), ce qui représente un risque pour le respect des normes légales régissant les émissions polluantes des véhicules automobiles.

## Présentation de l'invention

L'invention vise à remédier aux défauts des procédés de diagnostic connus, en proposant un procédé de diagnostic fiable, limitant les risques de non-détection et de fausse détection, et ne nécessitant pas de modifier le fonctionnement habituel du moteur par des réglages intrusifs entraînant une augmentation de la consommation de carburant ou des émissions polluantes du moteur.

## Résumé de l'invention

Pour atteindre cet objectif, l'invention porte sur un procédé de diagnostic d'un débitmètre d'air dans un moteur à combustion interne suralimenté, comportant au moins un circuit de recirculation partielle à basse pression des gaz d'échappement à l'admission du moteur, et pouvant comporter en outre un circuit de recirculation partielle à haute pression des gaz d'échappement à l'admission du moteur, ledit procédé comprenant au moins une étape de coupure du recyclage des gaz d'échappement puis une étape de diagnostic principal dans laquelle : on mesure une première valeur du débit d'air admis dans le moteur par le débitmètre ; on calcule une deuxième valeur du débit d'air grâce à un modèle de remplissage des cylindres du moteur ; et, on conclut que le débitmètre est en bon état ou défaillant respectivement quand la valeur absolue de l'écart entre ladite première et ladite deuxième valeur est inférieure ou supérieure à un seuil. La principale caractéristique du procédé selon l'invention est que :

- Il comporte, préalablement à la coupure du recyclage des gaz d'échappement, une étape dans laquelle on réalise au moins un pré-diagnostic du débitmètre, dans lequel on compare un critère représentatif de l'écart entre le débit d'air réel et le débit d'air mesuré par le débitmètre avec deux seuils, le pré-diagnostic permettant de conclure que le débitmètre est en bon état lorsque ledit écart est inférieur au plus petit des deux seuils et qu'il est défaillant lorsque ledit écart est supérieur au plus grand des deux seuils, ledit pré-diagnostic ne permettant pas de conclure lorsque ledit écart est compris entre les deux seuils ; et,
- l'étape de coupure de la recirculation des gaz d'échappement et l'étape de diagnostic principal ne sont mises en oeuvre que lorsque ledit pré-diagnostic ne permet pas de conclure.

## Présentation des figures

L'invention sera mieux comprise à la lecture d'un mode de réalisation non limitatif de celle-ci, à l'appui des figures annexées parmi lesquelles :

[Fig. 1] La figure 1 est une représentation schématique d'un premier exemple de dispositif de motorisation apte à la mise en oeuvre du procédé selon l'invention.
[Fig. 2] La figure 2 est une représentation graphique d'un deuxième exemple de dispositif de motorisation apte à la mise en oeuvre du procédé selon l'invention.
[Fig. 3] La figure 3 est un logigramme qui représente les différentes étapes du procédé selon l'invention, selon un mode de réalisation.

## Description détaillée

La figure 1 a déjà été décrite plus haut et n'appelle pas de commentaires supplémentaires.
Sur la figure 2, on a représenté un deuxième exemple de dispositif de motorisation apte à la mise en oeuvre du procédé selon l'invention. D'une manière générale, les mêmes références désignent les mêmes éléments sur les figures 1 et 2.

Le moteur 1 est ici par exemple du type diesel, à quatre cylindres en ligne, suralimenté par turbocompresseur, équipé d'un circuit de recirculation partielle à basse pression 27 des gaz d'échappement à l'admission, et il présente en outre, dans l'exemple représenté, un circuit de recirculation partielle à haute pression 37 des gaz d'échappement à l'admission (dit aussi : circuit EGR-HP), muni d'une vanne de réglage 38, dite vanne EGR-HP 38.

Ce circuit 37 prélève une partie des gaz d'échappement en un point du circuit d'échappement 3 situé avant la turbine 19. Son autre extrémité débouche en aval de la vanne d'admission des gaz 13, qui est quant à elle montée en aval du refroidisseur des gaz comprimés 14. Le débit des gaz recyclés à haute pression est réglé par le degré d'ouverture de la vanne EGR-HP 38. Dans le cas d'un moteur diesel, il est aussi connu de fermer partiellement la vanne d'admission 13 pour aspirer davantage de gaz d'échappement recyclés provenant du circuit EGR-HP 37, lorsque la dépression entre les extrémités du circuit 37 est trop faible pour assurer un débit suffisant.

La vanne d'admission 13 est associée à un capteur de pression amont 35 et à un capteur de pression aval 36. La vanne EGR-HP 38 est aussi associée à un capteur de pression amont 39 et aval 40. Les deux vannes sont encore chacune associées à un capteur de température aval (non représentés sur la figure 2).

Les dispositifs de dépollution 20,23,24, pour un moteur diesel, peuvent se présenter de la façon suivante : Le premier dispositif de dépollution 20 est par exemple un catalyseur d'oxydation. Il peut comprendre aussi un piège à oxydes d'azote. Il est associé à une sonde à oxygène amont 21, mais il est généralement dépourvu de sonde à oxygène aval. Dans le cas d'un moteur diesel, la sonde à oxygène amont 21 ne sert généralement pas à régler la richesse R du mélange air- carburant en boucle fermée sur une valeur de consigne Rsp lorsque le moteur est dans un mode de fonctionnement habituel en mélange pauvre, mais à des fins de surveillance et de diagnostic, le débit de carburant Qcarb étant injecté en boucle ouverte. En d'autres termes, le débit de carburant est réglé en boucle ouverte sur une valeur de consigne de débit Qcarb,sp,bo qui est calculée pour correspondre au couple de consigne Csp. Cependant, la sonde 21 peut servir à régler ladite richesse R en boucle fermée dans des modes de fonctionnement particuliers du moteur tels qu'un mode de régénération du piège à oxydes d'azote en mélange riche.

Le deuxième dispositif de dépollution 23 peut comprendre un catalyseur de réduction sélective des oxydes d'azote, dit aussi catalyseur SCR (de l'acronyme anglais pour : Sélective Catalytic Réduction), par exemple un catalyseur ayant aussi la fonction d'un filtre à particules, et un catalyseur d'oxydation.

Le troisième dispositif de dépollution 24 peut être, par exemple, un deuxième catalyseur SCR.

La nature et le fonctionnement des différents dispositifs de dépollution sont bien connus en soi et ne seront pas davantage détaillés.

Le réglage du moteur diffère du réglage du moteur présenté sur la figure 1 en ce qu'il s'agit sur cet exemple d'un moteur diesel et qu'il existe un circuit de recirculation supplémentaire, plus précisément un circuit de recirculation à haute pression 37.

Cependant on notera qu'il s'agit d'un exemple non limitatif. En variante, le moteur diesel de la figure 2 pourrait ne comporter qu'un seul circuit de recirculation à basse pression ; de la même manière, le moteur à essence de la figure 1 pourrait comporter un circuit de recirculation à basse pression et un circuit de recirculation à haute pression.

La consigne de couple Csp moteur, provenant d'une valeur d'enfoncement de la pédale d'accélérateur du véhicule par le conducteur, est transformée par un calculateur (non représenté) du moteur, selon le régime N du moteur, en une consigne de débit d'air Qair,sp , une consigne de débit de carburant Qcarb,sp,bo qui correspond à une valeur théorique de consigne de richesse Rsp, et une consigne de taux d'EGR $\tau$egr,sp . A partir de ces valeurs, le calculateur calcule une consigne de débit des gaz recyclés Qegr,sp et une consigne de débit total Qmot,sp à admettre dans les cylindres du moteur, selon les équations suivantes :

$$[\text{Math. 1}] \quad Qmot,sp = Qair,sp\ /\ (1 - \tau egr,sp)$$

et

$$[\text{Math. 2}] \quad Qegr,sp = \tau egr,sp * Qair,sp\ /\ (1 - \tau egr,sp)$$

D'autre part, la consigne de débit des gaz recyclés Qegr,sp est répartie en une consigne de débit des gaz Qegrhp,sp à fournir par le circuit EGR-HP et une consigne de débit des gaz Qegrbp,sp à fournir par le circuit EGR-BP, selon des contraintes spécifiques. Par exemple, pour éviter des risques de blocage de la vanne EGR-BP à froid, il est courant de n'utiliser que des gaz recyclés à haute pression.

On règle ensuite, d'une part, le débit total des gaz d'admission entrant dans le moteur, et d'autre part, le débit des gaz recyclés à haute pression, et le débit des gaz recyclés à basse pression. Le débit d'air n'est pas réglé directement, mais il est la résultante de ces deux réglages.

Pour régler le débit total des gaz d'admission admis dans le moteur, on procède comme dans l'exemple de la figure 1, en se servant du modèle de remplissage. On règle le débit dans le collecteur d'admission Pcol sur ladite consigne de pression Pcol,sp en boucle fermée, en ajustant la position angulaire des ailettes de la turbine 19 (ou en variante : de position de la vanne « waste gâte »), mais généralement sans modifier la position de la vanne d'admission.

Le débit des gaz recyclés à haute pression Qegrhp est réglé en boucle fermée sur sa valeur de consigne Qegrhp,sp , généralement en ajustant la position angulaire de la vanne EGR-HP 38. La valeur courante du débit des gaz recyclés à haute pression Qegrhp est déterminé à partir d'un modèle de Barré Saint Venant aux bornes de la vanne EGR-HP 38, conformément à l'équation suivante :

$$[\text{Math. 4}] \quad Qegrhp = [Pam * Se / Tam \tfrac{1}{2}] \times Cfe_{BSV}(Pav/Pam)$$

, équation dans laquelle Pam désigne la pression en amont de la vanne EGR-HP (mesurée par le capteur amont 39), Pav désigne la pression en aval de la vanne EGR-HP (mesurée par le capteur aval 40), Tam désigne la température en amont de la vanne EGR-HP ; Se désigne la section efficace de la vanne EGR-HP qui est une fonction de son angle d'ouverture, et $Cfe_{BSV}$ désigne le coefficient de Barré Saint Venant qui est une fonction du rapport entre la pression amont et la pression aval.

Le débit des gaz d'échappement recyclés à basse pression Qegrbp est réglé en boucle fermé sur sa valeur de consigne Qegrbp,sp généralement en ajustant la position de la vanne EGR-BP 30. Dans ce cas où un circuit EGR-HP est présent, le débit courant de gaz recyclés à basse pression Qegrbp est calculé comme égal à la valeur du débit total Qmot (issu du modèle de remplissage), auquel on retranche la valeur de débit d'air qui est mesurée par le débitmètre $Q_{HFM}$, et auquel on retranche en outre le débit de gaz recyclés à haute pression Qegrhp calculé à partir de l'équation de Barré Saint Venant.

Le débit de carburant Qcarb, s'agissant d'un moteur diesel, est injecté en boucle ouverte pour correspondre au débit de carburant de consigne Qcarb,sp,bo. Par exemple, ce débit de carburant de consigne Qcarb,sp,bo est calculé comme le produit du débit d'air de consigne Qair,sp multiplié par une valeur théorique de richesse de consigne à obtenir Rsp, qui est ensuite divisé par 14,7. Ici, la sonde à oxygène amont 21 ne sert pas à régler la richesse en boucle fermée autour de la valeur théorique de consigne Rsp, mais à surveiller dans quelle mesure cette consigne est atteinte dans le cadre du réglage du débit de carburant Qcarb en boucle ouverte sur sa consigne Qcarb,sp,bo.

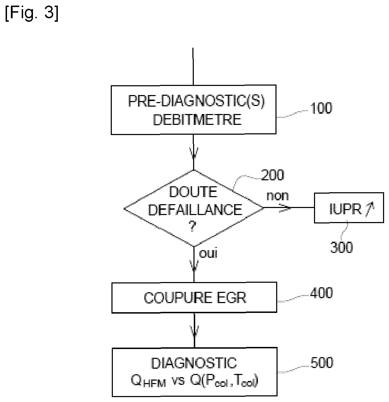

La figure 3 représente les différentes étapes d'un mode de réalisation du procédé de diagnostic selon l'invention, qui convient à un moteur à essence ou à un moteur diesel pourvu au moins d'un circuit EGR-BP et pouvant en outre comporter un circuit EGR-HP.

Le principe du diagnostic selon l'invention consiste, en cas de besoin de diagnostiquer le débitmètre 7, qui est par exemple dicté par les normes de diagnostic embarqué (normes OBD pour : On Board Diagnosis), à procéder dans un premier temps à au moins un pré-diagnostic connu qui ne soit pas intrusif, c'est-à-dire qui ne perturbe pas le fonctionnement du moteur et notamment qui n'augmente pas sa consommation de carburant (dans le cas d'un moteur à essence) ou ses émissions polluantes (dans le cas d'un moteur diesel), et dans un deuxième temps à ne procéder au diagnostic de l'état de l'art dans lequel on coupe la recirculation des gaz d'échappement sur un point de fonctionnement stabilisé que lorsque le pré-diagnostic ne permet pas de conclure si le débitmètre est en bon état ou défaillant.

Le procédé comprend une étape 100 qui peut consister à réaliser un ou plusieurs pré-diagnostics suivants du débitmètre.

Ces diagnostics sont basés sur la comparaison, avec deux seuils distincts, d'un critère représentatif de l'écart entre un débit d'air réel et le débit d'air mesuré par le débitmètre $Q_{HFM}$, ledit pré-diagnostic ne permettant pas de conclure lorsque ledit critère est compris entre lesdits deux seuils.

Par l'expression « débit réel », on entend au sens de cette invention une valeur de débit Qair, ou une valeur d'un critère représentatif du débit d'air, qui est supposée vraie dans la mesure où elle est mesurée par des moyens qui ne dépendent pas du débitmètre et qui sont quant à eux supposés parfaits.

Selon plusieurs modes de réalisation du pré-diagnostic, le critère est égal à la valeur absolue de l'écart entre le débit d'air mesuré par le débitmètre $Q_{HFM}$ et une valeur de débit Qair calculée à partir d'un modèle de remplissage des cylindres du moteur et/ou de modèles de Barré Saint Venant aux bornes de vannes du circuit d'admission d'air et du circuit d'échappement du moteur.

Dans un mode de réalisation en variante, il s'agit de la valeur absolue de d'une correction de débit de carburant Qcarb,corr appliquée pour régler en boucle fermée la valeur de la richesse du mélange air-carburant R sur une valeur de consigne. La valeur de richesse courante étant mesurée par la sonde à oxygène amont 21 du premier dispositif de dépollution 20 dans le cadre de la régulation en boucle fermée, elle est une fonction du débit d'air réel, pour un débit de carburant donné. Par conséquent, un écart entre le débit d'air réel Qair et le débit d'air mesuré $Q_{HFM}$ par le débitmètre se traduit par une mesure différente de la sonde à oxygène 21, et par une correction modifiée du débit de carburant Qcarb,corr à appliquer dans le cadre de la régulation de richesse R en boucle fermée. Ce mode de réalisation est surtout applicable dans le cas d'un moteur à essence, dans lequel un tel réglage de la richesse R en boucle fermée est réalisé. Cependant il n'exclut pas le cas d'un moteur diesel, dans lequel un tel réglage en boucle fermé de la richesse R est parfois appliqué dans certaines circonstances particulières (régénération d'un piège à oxydes d'azote en mélange riche par exemple).

Dans encore un autre mode de réalisation en variante, il s'agit de la valeur absolue de la différence entre une valeur réelle de richesse R et une valeur théorique de consigne de richesse Rsp correspondant à un débit de carburant Qcarb,sp,bo injecté en boucle ouverte. La valeur réelle de richesse R étant mesurée à partir des indications de la sonde à oxygène amont 21, elle est une fonction du débit d'air réel Qair. En revanche, le débit de carburant de consigne Qcarb,sp,bo est calculé à partir du débit d'air de consigne Qair,sp qui est théorique est qui peut ne pas être atteint. Par conséquent, un écart entre le débit d'air réel Qair et le débit mesuré $Q_{HFM}$ par le débitmètre conduit, pour une même quantité de carburant Qcarb,sp,bo injectée en boucle ouverte, à un écart entre la valeur de richesse R mesurée par la sonde amont 21 et la valeur théorique de consigne Rsp qui sert au calcul du débit de carburant de consigne Qcarb,sp,bo en boucle ouverte. Ce mode de réalisation concerne surtout les moteurs diesel. Cependant il n'exclut pas le cas d'un moteur à essence dans lequel le carburant viendrait à être injecté en boucle ouverte (par exemple : sur certains points de fonctionnement en pleine charge du moteur, où la richesse est strictement supérieure à 1).

Un premier pré-diagnostic possible consiste à comparer une première valeur du débit d'air $Q_{HFM}$ mesuré par le débitmètre 7 avec une seconde valeur du débit d'air Qair calculée comme la différence entre d'une part, le débit total des gaz d'admission Qmot calculé à partir du modèle de remplissage, et d'autre part, la somme du débit des gaz recyclés à haute pression Qegrhp et du débit des gaz recyclés à basse pression Qegrbp qui sont chacun calculés par des modèles de Barré Saint Venant. Le débitmètre est déclaré en bon état si la valeur absolue de la différence entre les deux valeurs est inférieure à un premier seuil, et il est déclaré défaillant si la valeur absolue de la différence est supérieure à un deuxième seuil qui est strictement supérieur au premier seuil. En raison de l'imprécision sur les différentes mesures et les différents modèles utilisés dans ce pré-diagnostic, il existe une zone entre les deux seuils où le pré-diagnostic présente une incertitude et où on ne peut pas conclure.

Un deuxième pré-diagnostic consiste à profiter d'une phase de roulage où, le conducteur relâchant le pied de la pédale d'accélérateur, la consigne de couple moteur Csp devient nulle et on coupe l'injection de carburant. En présence d'un besoin de diagnostiquer le débitmètre, on ferme la ou les vannes EGR présentes sur le moteur, ce qui ne crée aucun problème de surconsommation de carburant ni d'émissions polluantes, la combustion étant stoppée. Le moteur ne reçoit alors que de l'air. On compare une première valeur de débit d'air mesurée par le débitmètre $Q_{HFM}$ avec la valeur de débit total d'admission Qmot, en fait de l'air, calculée par le modèle de remplissage. Le débitmètre est déclaré en bon état si la valeur absolue de la différence entre les deux valeurs est inférieure à un troisième seuil, et il est déclaré défaillant si la valeur absolue de la différence est supérieure à un quatrième seuil qui est strictement supérieur au troisième seuil. Ici aussi, il existe une zone entre les deux seuils où le pré-diagnostic présente une incertitude, en raison des phénomènes transitoires lors de la phase de lever de pied.

Un troisième pré-diagnostic, utilisable dans le cas d'un moteur diesel, est réalisable pendant une phase de régénération d'un filtre à particules, ou pendant une phase de purge d'un piège à oxydes d'azote (purge dite de « déNOx » dans laquelle on vide le piège des molécules d'oxydes d'azote stockées en mélange pauvre, ou purge dite de « déSOx » dans laquelle on élimine les molécules d'oxydes de soufre qui s'y sont accumulées).

Ces modes nécessitent un fort enrichissement du mélange air-carburant. Pour cela on procède notamment à une fermeture partielle de la vanne d'admission, ce qui a pour effet de diminuer le débit d'air Qair tout en augmentant le débit Qegrhp des gaz EGR-HP aspirés. En parallèle, le circuit EGR-BP est coupé, c'est-à-dire que la vanne EGR-BP 30 est complètement fermée. La vanne d'admission des gaz 13, qui est située en amont du point d'arrivée des gaz EGR-HP, n'est traversée que par de l'air. A l'occasion de cette régénération ou de cette purge, on compare la première valeur du débit d'air mesurée par le débitmètre $Q_{HFM}$ avec une deuxième valeur du débit d'air Qair déterminée par un modèle de Barré Saint Venant aux bornes de la vanne d'admission 13. Le débitmètre est déclaré en bon état si la valeur absolue de la différence entre les deux valeurs est inférieure à un cinquième seuil, et il est déclaré défaillant si la valeur absolue de la différence est supérieure à un sixième seuil qui est strictement supérieur au cinquième seuil. Ici aussi, il existe une zone entre les deux seuils où le pré-diagnostic présente une incertitude et ne permet pas de conclure.

Un quatrième pré-diagnostic consiste à suivre l'évolution de la quantité de carburant injectée Qcarb pour le réglage de la valeur de richesse R en boucle fermée, lors d'un changement de consigne de couple du moteur. Le débit total de carburant injecté Qcarb est la somme d'un premier débit Qcarb,sp,bo calculé comme la quantité nécessaire pour réaliser la combustion du carburant avec le débit d'air de consigne prévu Qair,sp dans le moteur à la richesse de consigne prévue Rsp, et d'une correction de débit Qcarb,corr pour régler ladite valeur de richesse R sur la consigne Rsp. Par exemple pour un moteur à essence qui a une richesse de consigne égale à 1, le premier débit de carburant calculé ainsi en boucle ouverte Qcarb,sp,bo est égal au débit d'air de consigne Qair,sp divisé par 14,7.

Le premier débit de carburant Qcarb,sp,bo constitue une valeur de pré-positionnement pour la durée d'ouverture des injecteurs, qui permet ensuite une convergence rapide de la boucle fermée de réglage et avec une valeur de correction de débit positive ou négative qui reste faible, comprise dans des limites connues prédéterminées.

Cependant, dans le cas où le débitmètre surestime le débit d'air, le débit des gaz EGR-BP est réglé sur une valeur qui est trop élevée, si bien que le débit d'air de consigne qui était prévu Qair,sp n'est pas atteint dans la réalité. Le débit d'air réel Qair étant trop faible, la sonde à oxygène amont 21 indique des valeurs de richesse R qui sont aussi plus faibles, ce qui a pour conséquence une valeur de correction de débit Qcarb,corr de carburant positive qui sort des limites connues prédéterminées.

Inversement, si le débitmètre sous-estime le débit d'air, la valeur de correction de débit de carburant Qcarb,corr, négative, sera aussi trop forte (en valeur absolue) et sortira des limites connues prédéterminées.

Dans ce quatrième pré-diagnostic, on relève la valeur de la correction de débit de carburant de la boucle de richesse Qcarb,corr. Le débitmètre est déclaré en bon état si la valeur absolue de cette valeur est inférieure à un septième seuil, et il est déclaré défaillant si ladite valeur absolue est supérieure à un huitième seuil qui est strictement supérieur au septième seuil. Il subsiste un doute quand la valeur absolue est entre lesdits deux seuils, qui est dû à la précision de la régulation.

Un cinquième pré-diagnostic consiste à suivre la valeur de la richesse R mesurée par la sonde à oxygène amont 21 dans le cadre du réglage en boucle ouverte du débit de carburant Qcarb sur sa consigne Qcarb,sp,bo. Dans le cas où le débitmètre surestime le débit d'air, le débit des gaz EGR-BP est réglé sur une valeur qui est trop élevée, si bien que le débit d'air de consigne qui était prévu Qair,sp n'est pas atteint dans la réalité. Le débit d'air réel étant trop faible, la sonde à oxygène amont 21 indique une valeur de richesse R qui est plus élevée que la valeur théorique de consigne Rsp qui a servi à calculer le débit de carburant de consigne Qcarb,sp,bo.

Inversement, si le débitmètre sous-estime le débit d'air, la valeur de richesse R indiquée par la sonde à oxygène amont est plus faible que la valeur théorique Rsp.

Dans ce cinquième pré-diagnostic, on relève la valeur de richesse R. Le débitmètre est déclaré en bon état si la valeur absolue de la différence entre cette valeur R et la valeur théorique de richesse de consigne Rsp correspondant à la quantité de carburant Qcarb,sp,bo injectée en boucle ouverte pour obtenir le couple de consigne Csp est inférieure à un neuvième seuil, et il est déclaré défaillant si ladite valeur absolue est supérieure à un dixième seuil qui est strictement supérieur au neuvième seuil. Il subsiste un doute quand la valeur absolue est entre lesdits deux seuils.

A la suite de la réalisation d'un ou plusieurs de ces pré-diagnostics, le procédé se poursuit par une étape de test 200 dans laquelle on vérifie s'il existe un doute sur la défaillance du débitmètre.

Dans le cas où on a procédé à un seul des pré-diagnostics, le doute existe si l'unique critère de diagnostic correspondant est compris entre les deux seuils associés.

Dans le cas où on a procédé à une pluralité de pré-diagnostics, le doute existe seulement si la totalité des critères de diagnostics présentent des critères de diagnostics compris entre leurs deux seuils associés respectifs. La multiplication des pré-diagnostics permet de limiter davantage le nombre de cas où on aura recours au diagnostic intrusif principal.

En l'absence de doute (réponse NON), le procédé oriente vers une étape 300 dans laquelle le numérateur d'un indice IUPR (acronyme anglais pour « In Use Performance Ratio ») est incrémenté de 1 dans le cadre des normes de diagnostic embarqué. Bien entendu si l'absence de doute correspond au fait que le débitmètre est défaillant, une alerte peut être remontée au tableau de bord du véhicule sous la forme de l'allumage d'un voyant, pour qu'une remise en état du véhicule puisse être faite.

Dans le cas contraire (réponse OUI), le procédé se poursuit à l'étape 400 dans laquelle la recirculation des gaz d'échappement est coupée. Puis cela on ferme complètement la vanne EGR-BP 30 et aussi, le cas échéant, la vanne EGR-HP 38.

Puis le procédé se poursuit à l'étape 500 dans laquelle le diagnostic principal proprement dit est réalisé. Il comprend, comme exposé plus haut, une étape de mesure d'une première valeur du débit d'air grâce au débitmètre ; une étape de calcul d'une deuxième valeur du débit d'air grâce au modèle de remplissage, à partir de la pression Pcoll et de la température Tcoll mesurées dans le collecteur d'admission ; une étape de comparaison de la valeur absolue de la différence entre ladite valeur mesurée et ladite valeur calculée avec un seuil ; et, une étape dans laquelle le débitmètre est déclaré en bon état ou défaillant, respectivement selon que ladite valeur absolue est inférieure ou supérieure audit seuil.

A l'issue de l'étape de diagnostic principal, le procédé peut encore comprendre une étape similaire à l'étape 300 d'incrémentation de l'indice IUPR et une étape de remontée de défaut au tableau de bord dans le cas où le débitmètre est non conforme.

En résumé, le procédé selon l'invention permet de limiter les occurrences du diagnostic principal très fiable mais intrusif, en le remplaçant par un pré-diagnostic qui ne dégrade pas le comportement du moteur dans la plupart des cas où un tel pré-diagnostic ne présente pas de doute sur la conclusion. La multiplication des pré-diagnostics permet de diminuer encore davantage ces occurrences. Ainsi, on ne prend pas de risque de faux diagnostics (débitmètre en bon état jugé défaillant) ou de non diagnostic (débitmètre défaillant jugé en bon état), tout en limitant les effets sur les émissions polluantes.

**Revendications**

1. Procédé de diagnostic d'un débitmètre (7) d'air dans un moteur à combustion interne (1) suralimenté, comportant au moins un circuit de recirculation partielle à basse pression (27) des gaz d'échappement à l'admission du moteur, et pouvant comporter en outre un circuit de recirculation partielle à haute pression (37) des gaz d'échappement à l'admission du moteur, ledit procédé comprenant au moins une étape (400) de coupure du recyclage des gaz d'échappement puis une étape de diagnostic principal (500) dans laquelle : on mesure une première valeur du débit d'air ($Q_{HFM}$) admis dans le moteur par le débitmètre (7) ; on calcule une deuxième valeur du débit d'air (Qair) grâce à un modèle de remplissage des cylindres du moteur ; et, on conclut que le débitmètre est en bon état ou défaillant respectivement quand la valeur absolue de l'écart entre ladite première et ladite deuxième valeur est inférieure ou supérieure à un seuil,
le procédé étant **caractérisé en ce que**

   - le procédé comporte, préalablement à la coupure du recyclage des gaz d'échappement, une étape (100) dans laquelle on réalise au moins un pré-diagnostic du débitmètre (7), dans lequel on compare un critère représentatif de l'écart entre le débit d'air (Qair) réel et le débit d'air mesuré par le débitmètre ($Q_{HFM}$) avec deux seuils, le pré-diagnostic permettant de conclure que le débitmètre est en bon état lorsque ledit écart est inférieur au plus petit des deux seuils et qu'il est défaillant lorsque ledit écart est supérieur au plus grand des deux seuils, ledit pré-diagnostic ne permettant pas de conclure lorsque ledit écart est compris entre les deux seuils ;
   - l'étape de coupure de la recirculation des gaz d'échappement (400) et l'étape de diagnostic principal (500) ne sont mises en oeuvre que lorsque ledit pré-diagnostic (100) ne permet pas de conclure.

2. Procédé selon la revendication 1, dans lequel le critère représentatif de l'écart entre le débit d'air réel (Qair) et le débit d'air mesuré par le débitmètre ($Q_{HFM}$) est égal à la valeur absolue de la différence entre une première valeur de débit d'air mesurée par le débitmètre et une deuxième valeur de débit d'air calculée à partir d'un modèle de remplissage des cylindres du moteur et/ou de modèles de Barré Saint Venant aux bornes de vannes (13,30,38) du circuit d'admission d'air et/ou du circuit d'échappement du moteur.

3. Procédé selon la revendication 1, dans lequel le critère représentatif de l'écart entre le débit d'air réel (Qair) et le débit d'air mesuré par le débitmètre ($Q_{HFM}$) est égal à la valeur absolue d'une correction de quantité de carburant (Qcarb,corr) appliquée pour régler en boucle fermée la richesse du mélange air-carburant (R) dans le moteur autour d'une valeur de consigne (Rsp).

4. Procédé selon la revendication 1, dans lequel le critère représentatif de l'écart entre le débit d'air réel (Qair) et le débit d'air mesuré par le débitmètre ($Q_{HFM}$) est égal à la valeur absolue de la différence entre une première valeur de richesse (R), mesurée par une sonde à oxygène (21) montée en amont d'un dispositif de dépollution (20) du moteur, et une valeur de richesse théorique de consigne (Rsp) correspondant à une quantité de carburant injectée en boucle ouverte (Qcarb,sp,bo) dans le moteur.

5. Procédé selon l'une quelconque des revendications 1 ou 2, **caractérisé en ce que** l'étape de pré-diagnostic (100) comprend l'un au moins des pré-diagnostics suivants :

   - un premier pré-diagnostic, dans lequel : on mesure une première valeur du débit d'air ($Q_{HFM}$) par le débitmètre (7) ; on calcule une seconde valeur du débit d'air (Qair) comme la différence entre d'une part, entre le débit total des gaz d'admission (Qmot) dans le moteur qui est calculée à partir d'un modèle de remplissage, et d'autre part, le débit de gaz recyclé qui est calculé à partir de modèles de Barré Saint Venant aux bornes des vannes (30,38) de réglage du ou des circuits de recirculation ; on calcule la valeur absolue de l'écart entre ladite valeur mesurée ($Q_{HFM}$) et ladite valeur calculée du débit d'air (Qair) ; on déclare le débitmètre en bon état si ladite valeur absolue est inférieure à un premier seuil ; on déclare le débitmètre défaillant si la valeur absolue est supérieure à un deuxième seuil qui est strictement supérieur au premier seuil ; et, on ne peut pas conclure si ladite valeur absolue est comprise entre ledit premier seuil et ledit deuxième seuil.
   - un deuxième pré-diagnostic, dans lequel : la consigne de couple moteur (Csp) est nulle ; l'injection de carburant est coupée ; la recirculation des gaz d'échappement est coupée ; on mesure une première valeur de débit d'air ($Q_{HFM}$) par le débitmètre ; on détermine une deuxième valeur du débit d'air (Qair) comme le débit total d'admission des gaz dans le moteur (Qmot) calculé par un modèle de remplissage ; on calcule la valeur absolue de la différence entre ladite valeur mesurée et ladite valeur calculée ; on déclare le débitmètre en bon état si ladite valeur absolue est inférieure à un troisième seuil ; on déclare le débitmètre défaillant si ladite valeur absolue est supérieure à un quatrième seuil qui est strictement supérieur au troisième seuil ; et, on ne peut pas conclure si ladite valeur absolue est comprise entre ledit troisième seuil et ledit quatrième seuil.

- un troisième pré-diagnostic, le moteur (1) étant de type diesel , dans lequel : on purge ou on régénère un dispositif de dépollution (20,23) du moteur en refermant partiellement une vanne d'admission des gaz (13) du moteur et en fermant complètement le circuit de recirculation à basse pression (37) ; on mesure une première valeur du débit d'air ($Q_{HFM}$) par le débitmètre ; on calcule une deuxième valeur du débit d'air déterminée par un modèle de Barré Saint Venant aux bornes de la vanne d'admission (13) ; on calcule la valeur absolue de l'écart entre ladite valeur mesurée et ladite valeur calculée ; on déclare le débitmètre en bon état si ladite valeur absolue est inférieure à un cinquième seuil ; on déclare le débitmètre défaillant si ladite valeur absolue est supérieure à un sixième seuil qui est strictement supérieur au cinquième seuil ; et, on ne peut pas conclure si ladite valeur absolue est comprise entre ledit cinquième seuil et ledit sixième seuil.

6. Procédé selon l'une des revendications 1 ou 3, **caractérisé en ce qu'**il comprend au moins un quatrième pré-diagnostic, dans lequel : la richesse du mélange air-carburant (R) dans le moteur étant réglée en boucle fermée sur une valeur de consigne (Rsp) : on mesure la valeur d'une correction de débit de carburant (Qcarb,corr) à ajouter à une première valeur de débit de carburant déterminée en boucle ouverte (Qcarb,sp,bo) à partir du débit d'air de consigne (Qair,sp) à admettre dans le moteur ; on calcule la valeur absolue de ladite correction (Qcarb,corr) lorsque la boucle de richesse a convergé vers la valeur de consigne de richesse ; on déclare que le débitmètre est en bon état si ladite valeur absolue est inférieure à un septième seuil ; on déclare que le débitmètre est défaillant si ladite valeur absolue est supérieure à un huitième seuil qui est strictement supérieur au septième seuil ; et, on ne peut pas conclure si ladite valeur absolue est comprise entre le septième et le huitième seuil.

7. Procédé selon l'une des revendications 1 ou 4, **caractérisé en ce qu'**il comprend au moins un cinquième pré-diagnostic dans lequel, le débit de carburant (Qcarb) étant réglé en boucle ouverte sur une valeur de consigne (Qcarb,sp,bo) correspondant à l'atteinte d'une valeur théorique de consigne de richesse (Rsp) pour un débit d'air de consigne (Qair,sp) dans le moteur : on mesure une valeur de la richesse (R) dans le moteur par une sonde à oxygène (21) montée en amont d'un dispositif de dépollution (20) du moteur ; on calcule la valeur absolue de l'écart entre ladite valeur mesurée (R) de la richesse et ladite valeur théorique de consigne (Rsp) ; on déclare que le débitmètre est en bon état si ladite valeur absolue est inférieure à un neuvième seuil ; on déclare que le débitmètre est défaillant si ladite valeur absolue est supérieure à un dixième seuil qui est strictement supérieur au neuvième seuil ; et, on ne peut pas conclure si ladite valeur absolue est comprise entre le neuvième et le dixième seuil.

8. Procédé selon l'une des revendications précédentes , dans lequel le modèle de remplissage est une équation qui détermine la valeur du débit de gaz d'admission (Qmot) entrant dans le moteur en fonction d'une valeur de pression (Pcol) dans un collecteur d'admission du moteur, d'une valeur de température (Tcol) dans ledit collecteur, et d'une valeur de rendement volumétrique ($\eta$) qui est une fonction d'un ensemble de paramètres comprenant au moins le régime du moteur (N) et la pression dans le collecteur d'admission (Pcol).

9. Procédé selon l'une quelconque des revendications précédentes, dans lequel le débit total des gaz d'admission dans le moteur (Qmot) est réglé en réglant la pression dans le collecteur d'admission (Pcol) autour d'une valeur de consigne, en ajustant la position d'une vanne d'admission d'air (13) du moteur.

10. Procédé selon l'une quelconque des revendications précédentes, dans lequel le débit de gaz d'échappement à basse pression recyclés (Qegrbp) est réglé en boucle fermée sur une valeur de consigne en ajustant la position d'une vanne de recirculation à basse pression (30) du moteur.

**Patentansprüche**

1. Verfahren zur Diagnose eines Luftdurchflussmessers (7) in einem aufgeladenen Verbrennungsmotor (1), der mindestens einen Kreislauf (27) zur Niederdruck-Teilrückführung (27) der Abgase zur Ansaugseite des Motors aufweist, und außerdem einen Kreislauf (37) zur Hochdruck-Teilrückführung der Abgase zur Ansaugseite des Motors aufweisen kann, wobei das Verfahren mindestens einen Schritt (400) der Abschaltung der Abgas-Rückführung und dann einen Schritt der Hauptdiagnose (500) enthält, in der: ein erster Wert des in den Motor angesaugten Luftdurchflusses ($Q_{HFM}$) vom Durchflussmesser (7) gemessen wird; ein zweiter Wert des Luftdurchflusses (Qair) dank eines Füllmodells der Zylinder des Motors berechnet wird; und gefolgert wird, dass der Durchflussmesser in gutem Zustand bzw. defekt ist, wenn der Absolutwert der Abweichung zwischen dem ersten und dem zweiten Wert niedriger oder höher ist als eine Schwelle, wobei das Verfahren **dadurch gekennzeichnet ist, dass**

- das Verfahren vor der Abschaltung der Abgas-Rückführung einen Schritt (100) aufweist, in dem mindestens eine Vordiagnose des Durchflussmessers (Z) durchgeführt wird, wobei ein für die Abweichung zwischen dem realen Luftdurchfluss (Qair) und dem vom Durchflussmesser gemessenen Luftdurchfluss ($Q_{HFM}$) repräsentatives Kriterium mit zwei Schwellen verglichen wird, wobei die Vordiagnose es ermöglicht, zu folgern, dass der Durchflussmesser in gutem Zustand ist, wenn die Abweichung niedriger ist als die kleinste der zwei Schwellen, und dass er defekt ist, wenn die Abweichung höher ist als die größte der zwei Schwellen, wobei die Vordiagnose keine Folgerung ermöglicht, wenn die Abweichung zwischen den zwei Schwellen liegt;
- der Schritt der Abschaltung der Abgas-Rückführung (400) und der Schritt der Hauptdiagnose (500) nur durchgeführt werden, wenn die Vordiagnose (100) keine Folgerung erlaubt.

2. Verfahren nach Anspruch 1, wobei das für die Abweichung zwischen dem realen Luftdurchfluss (Qair) und dem vom Durchflussmesser gemessenen Luftdurchfluss ($Q_{HFM}$) repräsentative Kriterium gleich dem Absolutwert der Differenz zwischen einem ersten vom Durchflussmesser gemessenen Luftdurchflusswert und einem ausgehend von einem Füllmodell der Zylinder des Motors und/oder von Barré-Saint-Venant-Modellen an den Anschlüssen von Ventilen (13, 30, 38) des Luftansaugkreislaufs und/oder des Abgaskreislaufs des Motors berechneten zweiten Luftdurchflusswert ist.

3. Verfahren nach Anspruch 1, wobei das für die Abweichung zwischen dem realen Luftdurchfluss (Qair) und dem vom Durchflussmesser gemessenen Luftdurchfluss ($Q_{HFM}$) repräsentative Kriterium gleich dem Absolutwert einer Treibstoffmengenkorrektur (Qcarb,corr) ist, die angewendet wird, um in geschlossenem Regelkreis die Anreicherung des Luft-Treibstoff-Gemischs (R) im Motor um einen Sollwert (Rsp) herum einzustellen.

4. Verfahren nach Anspruch 1, wobei das für die Abweichung zwischen dem realen Luftdurchfluss (Qair) und dem vom Durchflussmesser gemessenen Luftdurchfluss ($Q_{HFM}$) repräsentative Kriterium gleich dem Absolutwert der Differenz zwischen einem von einer einer Abgasentgiftungsvorrichtung (20) des Motors vorgelagert montierten Sauerstoffsonde (21) gemessenen ersten Anreicherungswert (R) und einem theoretischen Anreicherungssollwert (Rsp) ist, der einer Treibstoffmenge entspricht, die in offenem Regelkreis (Qcarb,sp,bo) in den Motor injiziert wird.

5. Verfahren nach einem der Ansprüche 1 oder 2, **dadurch gekennzeichnet, dass** der Vordiagnoseschritt (100) mindestens eine der folgenden Vordiagnosen enthält:

- eine erste Vordiagnose, wobei: ein erster Wert des Luftdurchflusses ($Q_{HFM}$) vom Durchflussmesser (7) gemessen wird; ein zweiter Wert des Luftdurchflusses (Qair) als die Differenz zwischen einerseits dem Gesamtdurchfluss der Ansauggase (Qmot) im Motor, der ausgehend von einem Füllmodell berechnet wird, und andererseits dem rückgeführten Gasdurchfluss berechnet wird, der ausgehend von Barré-Saint-Venant-Modellen an den Anschlüssen der Einstellventile (30, 38) des oder der Rückführungskreisläufe berechnet wird; der Absolutwert der Abweichung zwischen dem gemessenen Wert ($Q_{HFM}$) und dem berechneten Wert des Luftdurchflusses (Qair) berechnet wird; der Durchflussmesser als in gutem Zustand erklärt wird, wenn der Absolutwert niedriger ist als eine erste Schwelle; der Durchflussmesser als defekt erklärt wird, wenn der Absolutwert höher ist als eine zweite Schwelle, die strikt höher ist als die erste Schwelle; und nicht gefolgert werden kann, wenn der Absolutwert zwischen der ersten Schwelle und der zweiten Schwelle liegt,
- eine zweite Vordiagnose, wobei: der Drehmomentsollwert (Csp) null ist; die Treibstoffzufuhr abgeschaltet ist; die Abgasrückführung abgeschaltet ist; ein erster Luftdurchflusswert ($Q_{HFM}$) vom Durchflussmesser gemessen wird; ein zweiter Wert des Luftdurchflusses (Qair) als der von einem Füllmodell berechnete Gesamtdurchfluss der Gasansaugung in den Motor (Qmot) bestimmt wird; der Absolutwert der Differenz zwischen dem gemessenen Wert und dem berechneten Wert berechnet wird; der Durchflussmesser als in gutem Zustand erklärt wird, wenn der Absolutwert niedriger ist als eine dritte Schwelle; der Durchflussmesser als defekt erklärt wird, wenn der Absolutwert höher ist als eine vierte Schwelle, die strikt höher ist als die dritte Schwelle; und nicht gefolgert werden kann, wenn der Absolutwert zwischen der dritten Schwelle und der vierten Schwelle liegt,
- eine dritte Vordiagnose, wobei der Motor (1) ein Dieselmotor ist, wobei: eine Abgasentgiftungsvorrichtung (20, 23) des Motors gereinigt oder regeneriert wird, indem ein Ansaugventil der Gase (13) des Motors teilweise wieder geschlossen wird und indem der Niederdruck-Rückführungskreislauf (37) vollständig geschlossen wird; ein erster Wert des Luftdurchflusses ($Q_{HFM}$) vom Durchflussmesser gemessen wird; ein von einem Barré-Saint-Venant-Modell bestimmter zweiter Wert des Luftdurchflusses an den Anschlüssen des Ansaugventils (13) berechnet wird; der Absolutwert der Abweichung zwischen dem gemessenen Wert und dem berechneten Wert berechnet wird; der Durchflussmesser als in gutem Zustand erklärt wird, wenn der Absolutwert niedriger ist als eine fünfte Schwelle; der Durchflussmesser als defekt erklärt wird, wenn der Absolutwert höher ist als eine sechste Schwelle, die strikt höher ist als die fünfte Schwelle; und nicht gefolgert werden kann, wenn der Absolutwert zwischen der fünften Schwelle und der sechsten Schwelle liegt.

6. Verfahren nach einem der Ansprüche 1 oder 3, **dadurch gekennzeichnet, dass** es mindestens eine vierte Vordiagnose enthält, wobei: da die Anreicherung des Luft-Treibstoff-Gemischs (R) im Motor in geschlossenem Regelkreis auf einen Sollwert (Rsp) eingestellt ist: der Wert einer Treibstoffdurchflusskorrektur (Qcarb,corr) gemessen wird, der zu einem in offenem Regelkreis (Qcarb,sp,bo) ausgehend vom in den Motor anzusaugenden Sollluftdurchfluss (Qair,sp) bestimmten ersten Treibstoffdurchflusswert hinzuzufügen ist; der Absolutwert der Korrektur (Qcarb,corr) berechnet wird, wenn der Anreicherungsregelkreis zum Anreicherungsollwert konvergiert ist; der Durchflussmesser als in gutem Zustand erklärt wird, wenn der Absolutwert niedriger ist als eine siebte Schwelle; der Durchflussmesser als defekt erklärt wird, wenn der Absolutwert höher ist als eine achte Schwelle, die strikt höher ist als die siebte Schwelle; und nicht gefolgt werden kann, wenn der Absolutwert zwischen der siebten und der achten Schwelle liegt.

7. Verfahren nach einem der Ansprüche 1 oder 4, **dadurch gekennzeichnet, dass** es mindestens eine fünfte Vordiagnose enthält, wobei, da der Treibstoffdurchfluss (Qcarb) in offenem Regelkreis auf einen Sollwert (Qcarb,sp,bo) eingestellt ist, der dem Erreichen eines theoretischen Anreicherungssollwerts (Rsp) für einen Sollluftdurchfluss (Qair,sp) im Motor entspricht: ein Wert der Anreicherung (R) im Motor von einer einer Abgasentgiftungsvorrichtung (20) des Motors vorgelagert montierten Sauerstoffsonde (21) gemessen wird; der Absolutwert der Abweichung zwischen dem gemessenen Wert (R) der Anreicherung und dem theoretischen Sollwert (Rsp) berechnet wird; der Durchflussmesser als in gutem Zustand erklärt wird, wenn der Absolutwert niedriger ist als eine neunte Schwelle; der Durchflussmesser als defekt erklärt wird, wenn der Absolutwert höher ist als eine zehnte Schwelle, die strikt höher ist als die neunte Schwelle; und nicht gefolgt werden kann, wenn der Absolutwert zwischen der neunten und der zehnten Schwelle liegt.

8. Verfahren nach einem der vorhergehenden Ansprüche, wobei das Füllmodell eine Gleichung ist, die den Wert des in den Motor eintretenden Ansauggasdurchflusses (Qmot) abhängig von einem Druckwert (Pcol) in einem Ansaugkrümmer des Motors, einem Temperaturwert (Tcol) im Krümmer und einem volumetrischen Leistungswert (η) bestimmt, der eine Funktion einer Einheit von Parametern ist, die mindestens die Drehzahl des Motors (N) und den Druck im Ansaugkrümmer (Pcol) enthält.

9. Verfahren nach einem der vorhergehenden Ansprüche, wobei der Gesamtdurchfluss der Ansauggase in den Motor (Qmot) eingestellt wird, indem der Druck im Ansaugkrümmer (Pcol) um einen Sollwert herum eingestellt wird, indem die Position eines Luftansaugventils (13) des Motors angepasst wird.

10. Verfahren nach einem der vorhergehenden Ansprüche, wobei der Durchfluss von rückgeführten Niederdruck-Abgasen (Qegrbp) in geschlossenem Regelkreis auf einen Sollwert eingestellt wird, indem die Position eines Niederdruck-Rückführungsventils (30) des Motors angepasst wird.

**Claims**

1. Diagnosis method for an air flowmeter (7) in a supercharged internal-combustion engine (1) that includes at least a low-pressure partial recirculation system (27) for exhaust gases at the intake of the engine, and that may also include a high-pressure partial recirculation system (37) for exhaust gases at the intake of the engine, said method comprising at least one step (400) of interrupting exhaust gas recycling, followed by a main diagnosis step (500) in which: a first air flow rate value ($Q_{HFM}$) for air entering the engine is measured by the flowmeter (7), a second air flow rate value (Qair) is calculated using a filling model of the cylinders of the engine, and the flowmeter is deemed to be in good condition or faulty respectively if the absolute value of the difference between said first value and said second value is less than or greater than a threshold, the method being **characterized in that**

- the method comprises, prior to interruption of exhaust gas recycling, a step (100) in which at least one pre-diagnosis of the flowmeter (7) is carried out, in which a criterion representing the difference between the real air flow rate (Qair) and the air flow rate measured by the flowmeter ($Q_{HFM}$) is compared with two thresholds, the pre-diagnosis determining that the flowmeter is in good condition if said difference is less than the lesser of the two thresholds, and that the flowmeter is faulty if said difference is greater than the greater of the two thresholds, said pre-diagnosis reaching no conclusion if said difference is between the two thresholds,
- the exhaust gas recirculation interruption step (400) and the main diagnosis step (500) only being implemented if said pre-diagnosis (100) reaches no conclusion.

2. Method according to Claim 1, in which the criterion representing the difference between the real air flow rate (Qair) and the air flow rate measured by the flowmeter ($Q_{HFM}$) is equal to the absolute value of the difference between a first air flow rate value measured by the flowmeter and a second air flow rate value calculated using a filling model of the cylinders of the engine and/or Saint-Venant models at the valve terminals (13, 30, 38) of the air intake circuit and/or of the exhaust circuit of the engine.

3. Method according to Claim 1, in which the criterion representing the difference between the real air flow rate (Qair) and the air flow rate measured by the flowmeter ($Q_{HFM}$) is equal to the absolute value of a fuel quantity correction (Qcarb,corr) applied to regulate the richness of the air-fuel ratio (R) in the engine in a closed loop about a set-point value (Rsp).

4. Method according to Claim 1, in which the criterion representing the difference between the real air flow rate (Qair) and the air flow rate measured by the flowmeter ($Q_{HFM}$) is equal to the absolute value of the difference between a first richness value (R), measured by an oxygen sensor (21) mounted upstream of an emission control system (20) of the engine, and a theoretical set-point richness value (Rsp) corresponding to a quantity of fuel open-loop injected (Qcarb,sp,bo) into the engine.

5. Method according to any one of Claims 1 or 2, **characterized in that** the pre-diagnosis step (100) comprises at least one of the following pre-diagnoses:

   - a first pre-diagnosis in which a first air flow rate value ($Q_{HFM}$) is measured by the flowmeter (7), a second air flow rate value (Qair) is calculated as the difference between the total flow rate of the intake gases (Qmot) entering the engine, which is calculated using a filling model, and the recycled gas flow rate, which is calculated using Saint-Venant models at the regulating valve terminals (30, 38) of the recirculation system or systems, the absolute value of the difference between said measured value ($Q_{HFM}$) and said calculated value of the air flow rate (Qair) is calculated, the flowmeter is deemed to be in good condition if said absolute value is less than a first threshold, the flowmeter is deemed to be faulty if the absolute value is greater than a second threshold that is strictly greater than the first threshold, and nothing is concluded if said absolute value is between said first threshold and said second threshold.
   - a second pre-diagnosis in which the engine torque set-point (Csp) is zero, fuel injection is interrupted, exhaust gas recirculation is interrupted, a first air flow rate value ($Q_{HFM}$) is measured by the flowmeter, a second air flow rate value (Qair) is determined as the total gas intake flow rate into the engine (Qmot) calculated using a filling model, the absolute value of the difference between said measured value and said calculated value is calculated, the flowmeter is deemed to be in good condition if said absolute value is less than a third threshold, the flowmeter is deemed to be faulty if said absolute value is greater than a fourth threshold that is strictly greater than the third threshold, and nothing is concluded if said absolute value is between said third threshold and said fourth threshold.
   - a third pre-diagnosis, where the engine (1) is a diesel engine, in which an emission control system (20, 23) of the engine is purged or regenerated by partially closing a gas intake valve (13) of the engine and completely closing the low-pressure recirculation system (37), a first air flow rate value ($Q_{HFM}$) is measured by the flowmeter, a second air flow rate value determined by a Saint-Venant model at the terminals of the intake valve (13) is calculated, the absolute value of the difference between said measured value and said calculated value is calculated, the flowmeter is deemed to be in good condition if said absolute value is less than a fifth threshold, the flowmeter is deemed to be faulty if said absolute value is greater than a sixth threshold that is strictly greater than the fifth threshold, and nothing is concluded if said absolute value is between said fifth threshold and said sixth threshold.

6. Method according to one of Claims 1 or 3, **characterized in that** it includes at least a fourth pre-diagnosis, in which, where the richness of the air-fuel ratio (R) in the engine is under closed-loop control about a set-point value (Rsp), the value of a fuel flow rate correction (Qcarb,corr) to be added to a first fuel flow rate value (Qcarb,sp,bo) determined in open loop based on the set-point air flow rate (Qair,sp) to be taken into the engine is measured, the absolute value of said correction (Qcarb,corr) is calculated when the richness loop has converged with the richness set-point value, the flowmeter is deemed to be in good condition if said absolute value is less than a seventh threshold, the flowmeter is deemed to be faulty if said absolute value is greater than an eighth threshold that is strictly greater than the seventh threshold, and nothing is concluded if said absolute value is between the seventh threshold and the eighth threshold.

7. Method according to one of Claims 1 or 4, **characterized in that** it includes at least a fifth pre-diagnosis in which, where the fuel flow rate (Qcarb) is under open-loop control with a set-point value (Qcarb,sp,bo) corresponding to achievement of a theoretical richness set-point value (Rsp) for a set-point air flow rate (Qair,sp) in the engine, a richness value (R) in the engine is measured by an oxygen sensor (21) mounted upstream of an emission control system (20) of the engine, the absolute value of the difference between said measured richness value (R) and said theoretical set-point value (Rsp) is calculated, the flowmeter is deemed to be in good condition if said absolute value is less than a ninth threshold, the flowmeter is deemed to be faulty if said absolute value is greater than a tenth threshold that is strictly greater than the ninth threshold, and nothing is concluded if said absolute value is between the ninth threshold and the tenth threshold.

8. Method according to one of the preceding claims, in which the filling model is an equation that determines the intake gas flow rate value (Qmot) for gas entering the engine as a function of a pressure value (Pcol) in an intake manifold of the engine, a temperature value (Tcol) in said manifold, and a volumetric efficiency value ($\eta$) that is a function of a set of parameters comprising at least the speed of the engine (N) and the pressure in the intake manifold (Pcol).

9. Method according to any one of the preceding claims, in which the total flow rate of the intake gases in the engine (Qmot) is regulated by controlling the pressure in the intake manifold (Pcol) about a set-point value, by adjusting the position of an air intake valve (13) of the engine.

10. Method according to any one of the preceding claims, in which the low-pressure recycled exhaust gas flow rate (Qegrbp) is closed-loop controlled about a set-point value by adjusting the position of a low-pressure recirculation valve (30) of the engine.

[Fig. 1]

[Fig. 2]

[Fig. 3]

```
              │
              ▼
    ┌──────────────────────┐
    │  PRE-DIAGNOSTIC(S)    │────  100
    │     DEBITMETRE        │
    └──────────────────────┘
              │
              ▼
           ╱────────╲        200
          ╱  DOUTE    ╲         non      ┌──────────┐
         ◄ DEFAILLANCE ►────────────────►│  IUPR ↗  │
          ╲    ?      ╱                   └──────────┘
           ╲────────╱                          300
              │ oui
              ▼
    ┌──────────────────────┐
    │     COUPURE EGR       │────  400
    └──────────────────────┘
              │
              ▼
    ┌──────────────────────┐
    │     DIAGNOSTIC        │────  500
    │  Q_HFM vs Q(P_col,T_col) │
    └──────────────────────┘
```

**RÉFÉRENCES CITÉES DANS LA DESCRIPTION**

**Documents brevets cités dans la description**

- US 20120130618 A1